# EUROPEAN PATENT APPLICATION

(11) **EP 2 178 003 A2**
(43) Date of publication of application: **21.04.2010**
(21) Application number: 09167970.4
(22) Date of filing: 17.08.2009
(51) Int. Cl.: G06F 17/30

(54) **Methods and apparatus for content-defined node splitting**

(30) Priority: 25.09.2008 US 237904
(71) Applicant: NEC Laboratories America, Inc., Princeton, NJ 08540 (US)
(72) Inventor: Kruss, Erik, Hillsborough, NJ 08844 (US); Ungureanu, Cristian, Princeton, NJ 08540 (US); Gokhale, Salil, Secaucus, NJ 07094 (US); Aranya, Akshat, Jersey City, NJ 07302 (US); Rago, Stephen A., Warren, NJ 07059 (US)
(74) Representative: Betten & Resch

(57) **Abstract**

A region of a node is searched to find a content-defined split point. A split point of a node is determined based at least in part on hashes of entries in the node and the node is split based on the determined split point. The search region is searched for the first encountered split point and the node is split based on that split point. That split point is based on a predetermined bitmask of the hashes of the entries in the node satisfying a predetermined condition.

## Description

### BACKGROUND OF THE INVENTION

The present invention relates generally to node splitting in data structures and more particularly to content-defined node splitting in data structures.

In conventional backup systems, large amounts (e.g. terabytes) of input data must be indexed and stored. Data structures, such as tree structures, are used to store metadata (e.g., indices of underlying data, nodes, etc.) related to data (e.g., directories, files, data sequences, data chunks, etc.). In backup systems for large file systems, these data structures arrange consistent or variable sized chunks of file data in an ordered sequence. That is, the underlying file data is a sequence of chunks of bytes from input streams with associated file offsets, and a metadata tree arranges addresses of the chunks into an ordered sequence. In this way, locations of the underlying data and likewise of auxiliary file- and directory-related information are stored persistently to enable retrieval in the proper order.

In many applications (e.g. backup or archival) metadata structures must be generated and stored that correspond to identical or largely similar content. For example, an identical file system may be transmitted for storage at two times, but the insertion order of the content may differ (e.g. due to variable delays in data transmission). Alternatively, a large file system with a small number of changes may be backed up later. Storing two metadata trees corresponding to identical or highly similar underlying data, metadata structures that have significant amounts of nodes that are not identical increases storage cost. To achieve metadata structures with correspondingly large degrees of identical nodes require and rebalancing of the nodes of the data structure, since this may be prohibitively expensive in terms of time or storage resources.

Generally, content-defined data chunking systems use standard data structures to store sequences of chunk hash information (e.g., metadata). Metadata sequences are maintained as large data structures (e.g., sequences, lists, trees, B+ trees, etc.) of metadata nodes inducing an order on the underlying stored content. In data archival systems, these data structures must be persistently stored and operate in an on-line "streaming" environment. To prevent overfilling these data structures, node-splitting policies are invoked to achieve reasonable average node filling while limiting the maximum number of node entries.

For example, a conventional B+ tree may use a midpoint-split node splitting policy. If the data structure is grown on two occasions in ascending insertion order and an additional data item is present in the second occasion, all split points after the additional data item may be shifted by one position with respect to split points used in the first occasion. Thus, nodes created with different split points will not contain the same entries; they will not be exact duplicates in the two data structures.

In another example, representative of changing the insertion order of identical content, if a single data item is removed from an original leaf node in the data structure and is inserted at a later point, then differently partitioned nodes can result. If the delayed insertion occurs after the original leaf node has been generated in its final form, then all nodes from the removal point until the later insertion point may differ when the new tree is compared to the original tree. Content of tree nodes using conventional splitting policies depends upon insertion order.

In typical node-splitting policies when multiple order-inducing data structures are stored, small changes in underlying data or insertion order can result in large numbers of nonduplicate nodes. Accordingly, improved systems and methods of node splitting in data structures are required.

### BRIEF SUMMARY OF THE INVENTION

The present invention generally provides a method of content-defined node splitting.

A region of a node is searched to find a content-defined split point. A split point of a node is determined based at least in part on hashes of entries (e.g., chunks, subnodes, etc.) in the node and the node is split based on the determined split point. The search region is searched for a unique (e.g., the first) encountered split point. The node is split based on that split point. That split point is typically based on comparing a predetermined bitmask of the hashes of the entries in the node to a predetermined value (e.g. zero).

These and other advantages of the invention will be apparent to those of ordinary skill in the art by reference to the following detailed description and the accompanying drawings.

### BRIEF DESCRIPTION OF THE DRAWINGS

FIG. 1 is a diagram of a storage system;

FIG. 2 depicts a file system according to an embodiment of the present invention;

FIG. 3 is a diagram of conventional node splitting in comparison to content-defined node splitting illustrating a small difference in stored content;

FIG. 4 is a diagram of conventional node splitting in comparison to content-defined node splitting illustrating the effect of storing identical content but with a different insertion order;

FIG. 5 is a flowchart of a method of content-defined node splitting according to an embodiment of the present invention; and

FIG. 6 depicts an exemplary content-defined node splitting policy according to an embodiment of the present invention.

### DETAILED DESCRIPTION

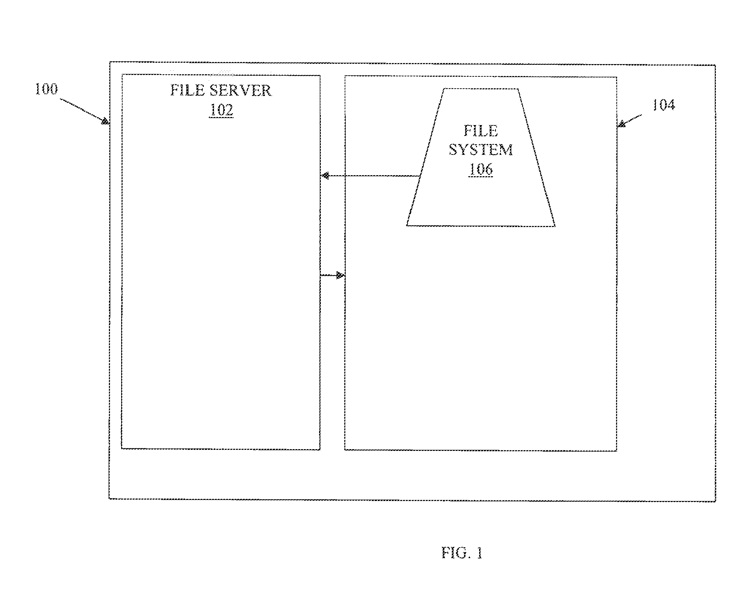

Content addressable storage (CAS) systems store information that can be retrieved based on content instead of location. FIG. 1 is a diagram of a storage system 100. In at least one embodiment of the present invention, the methods of node splitting described herein are performed in a storage system such as storage system 100. Implementation of such a storage systems is described in further detail in related U.S. Patent Application No. 12/042,777, entitled "System and Method for Content Addressable Storage", filed March 5, 2008 and incorporated by reference herein.

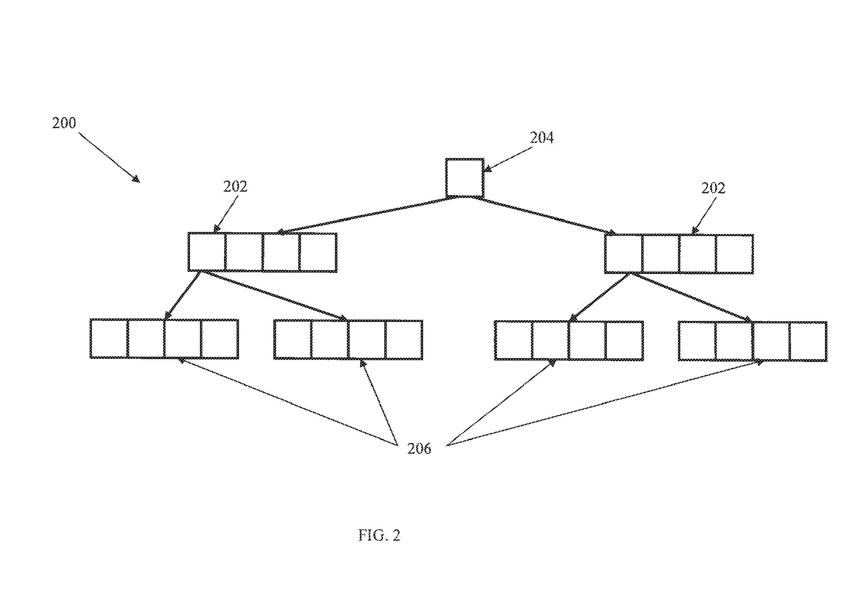

Storage system 100 comprises a file server 102 for receiving data operations (e.g., file writes, file reads, etc.) and metadata operations (e.g., file remove, etc.), chunking the received data into data blocks to be stored in block store 104. Block store 104 stores data and metadata blocks, some of which might point to other blocks, and which can be organized to describe a file system 106, described in further detail below with respect to FIGS. 2-5.

In the context of the present description, metadata is any data that is not file content. For example, metadata may be information about one or more files viewable by a client, such as a file or directory name, a file creation time, file size, file permissions, etc., and/or information about one or more files and/or a file system not viewable by a client, such as indexing structures, file offsets, etc. Of course, other appropriate metadata (e.g., information about data, one or more files, one or more data blocks, one or more data structures, one or more file systems, bitmaps, etc.) may be used.

File server 102 may be any computer or other device coupled to a client and configured to provide a location for storage of data (e.g., information, documents, files, etc.). Accordingly, file server 102 may have storage and/or memory. Additionally, file server 102 chunks data into data blocks (e.g., generates data blocks). That is, file server 102 creates data blocks (e.g., chunks) from client data and/or otherwise groups data and metadata in a manner to allow for storage in a CAS and writes these data and metadata blocks to the block store 104.

The block store 104 may recognize the data block as a previously seen (e.g., known, stored, etc.) data block and return its content address or may recognize the data block as a new block, generate a content address for it, and return the content address. Content addresses, which may be received together with a confirmation that the write has been completed, can be used to re-fetch a data block.

Block store 104 may be a CAS system or other appropriate memory and/or storage system. In at least one embodiment, block store 104 is a cluster-based content addressable block storage system as described in US. Patent Application No. 12/023,133, filed January 31, 2008, and US. Patent Application No. 12/023,141, filed January 31, 2008, each incorporated herein by reference. Of course, other address-based storage systems may be utilized. Block store 104 contains data blocks that can be organized as a file system 106. File system 106 is a data structure that can be represented as a tree structure, as discussed in further detail below with respect to FIGS. 2-5.

Storage system 100 may have a processor (not shown) that controls the overall operation of the storage system 100 by executing computer program instructions that define such operation. In the same or alternative embodiments, file server 102 and/or block store 104 may each have a controller, processor, or other device that controls at least a portion of operations of the storage system 100 by executing computer program instructions that define such operation. The computer program instructions may be stored in a storage device (e.g., magnetic disk, database, etc.) and/or loaded into a memory when execution of the computer program instructions is desired. Thus, applications for performing the herein-described method steps and associated functions of storage system 100, such as data storage, node splitting, etc., in method 500 are defined by the computer program instructions stored in the memory and controlled by the processor executing the computer program instructions. Storage system 100 may include one or more central processing units, read only memory (ROM) devices and/or random access memory (RAM) devices. One skilled in the art will recognize that an implementation of an actual content addressable storage system could contain other components as well, and that the storage system 100 of FIG. 1 is a high level representation of some of the components of such a storage system for illustrative purposes.

According to some embodiments of the present invention, instructions of a program (e.g., controller software) may be read into file server 102, and/or block store 104, such as from a ROM device to a RAM device or from a LAN adapter to a RAM device. Execution of sequences of the instructions in the program may cause the storage system 100 to perform one or more of the method steps described herein, such as those described below with respect to method 500. In alternative embodiments, hard-wired circuitry or integrated circuits may be used in place of, or in combination with, software instructions for implementation of the processes of the present invention. Thus, embodiments of the present invention are not limited to any specific combination of hardware, firmware, and/or software. The block store 104 may store the software for the storage system 100, which may be adapted to execute the software program and thereby operate in accordance with the present invention and particularly in accordance with the methods described in detail below. However, it would be understood by one of ordinary skill in the art that the invention as described herein could be implemented in many different ways using a wide range of programming techniques as well as general-purpose hardware sub-systems or dedicated controllers.

Such programs may be stored in a compressed, uncompiled, and/or encrypted format. The programs furthermore may include program elements that may be generally useful, such as an operating system, a database management system, and device drivers for allowing the controller to interface with computer peripheral devices, and other equipment/components. Appropriate general-purpose program elements are known to those skilled in the art, and need not be described in detail herein.

A content-defined node splitting method pseudo-randomly selects a node split point based on the underlying data content. Generally, a unique element that satisfies a given criteria required for a content-defined node split point is to be selected in a given search region. Accordingly, the probability of any given element being selected as a potential split point is low.

A single data item insertion is not likely to influence the split point decision. Therefore, the difference between the two tree growths is likely to be contained within a single leaf node and the associated path to the root. Even if the single data item insertion does influence the node split point decision, the trees will likely resynchronize in subsequent growth.

Similarly, when the insertion order of a single data item is varied during content-defined node splitting, the item is not likely to be a content-defined node split point. When the insertion times differ so little as to occur before the node splitting decision, two identical trees result. However, when insertion times of the two data items are separated sufficiently, trees grown using content-defined node splitting have a large probability of having intermediate nodes being unaffected and a high probability of showing localized node changes.

FIG. 2 depicts a file system 200 according to an embodiment of the present invention. File system 200 may be a data structure, data tree, data list or other data, metadata, chunk, block, and/or hash storage as described herein.

Generally, file system 200 includes a series of nodes 202 arranged in a data structure, such as a high-fanout B+ tree. Accordingly, nodes 202 are ultimately coupled to a root 204, as would be understood by those of skill in the art of storage structures. File system 200 may then have any appropriate number of nodes 202. That is, as the file system 200 is grown, appropriate numbers of nodes 202 are added and/or filled. Each node 202 includes a number of entries (e.g., slots, blocks, chunks, etc.) 206. There may be any number of layers of nodes 202 and/or entries 206 as is known in data structures.

In at least one embodiment, entries 206 are hashes of data and/or metadata describing other entries 206, nodes 202, and/or data. In the following, entries in nodes used in such order-inducing data structures are referred to as chunks, and understand that in different context chunks may represent different logical components (e.g. other data structure nodes, directories, files, file content, inodes, file attributes, etc.)

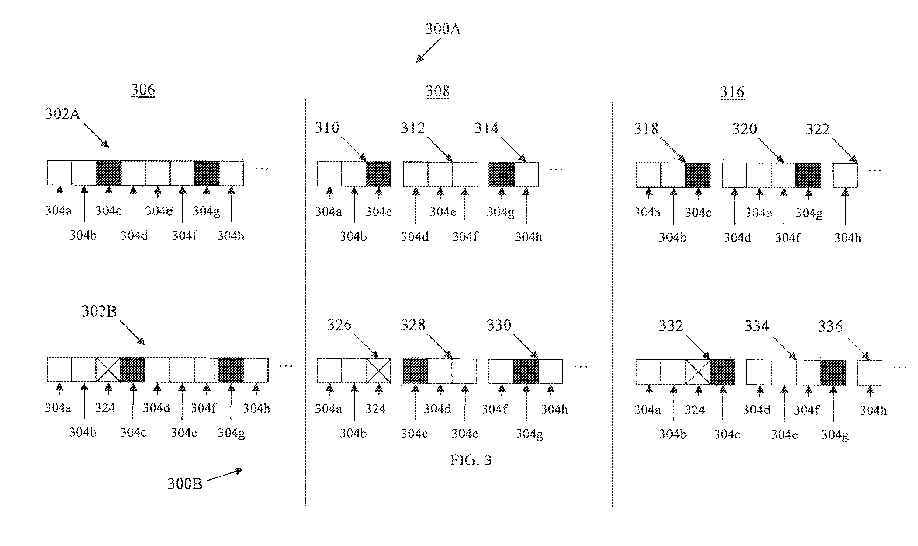

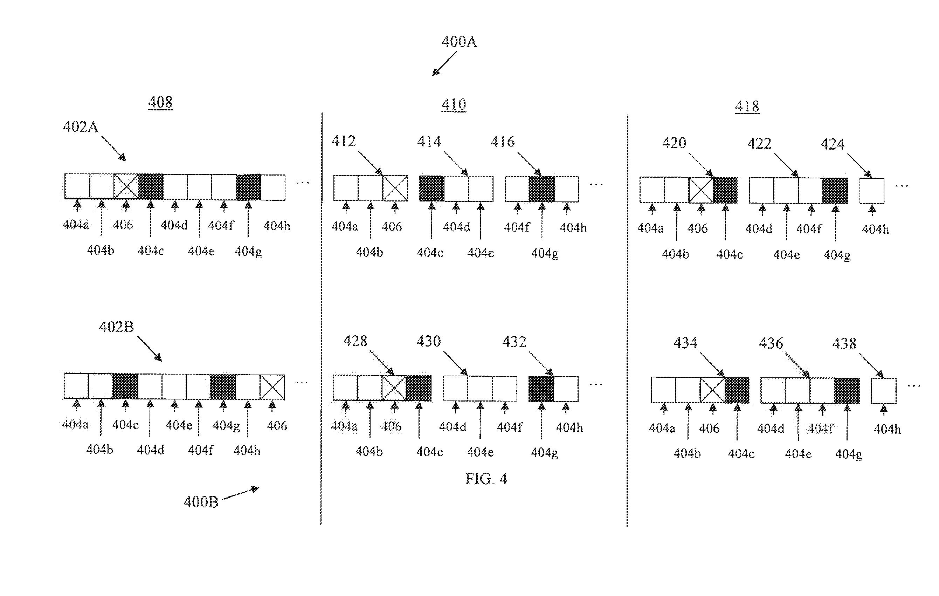

In Figs. 3 and 4, node-splitting policies are described as applied to insertion of data into data structures, since this situation is the most important for backup applications using CAS. However, it is also possible to apply these policies during node underflow conditions, during erase operations, by applying (possibly repeatedly) a node splitting operation to the amalgamated node entries of two (or more) sequential nodes to generate replacement nodes containing numbers of entries within desired ranges.

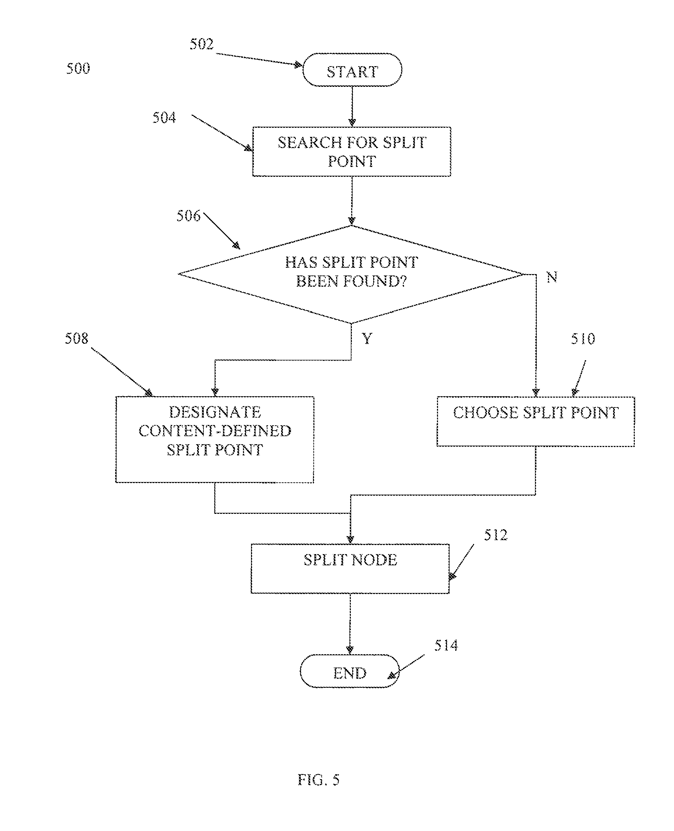

FIG. 3 depicts respective diagrams 300A and 300B, which are an example of conventional node splitting in comparison to content-defined node splitting. Diagram 300A shows a comparison of conventional node splitting to content-defined node splitting on ideal, sorted insertion sequence 302A, Diagram 300B shows a comparison of conventional node splitting to content-defined node splitting in which an additional chunk 324 is present within the ideal, sorted, insertion sequence 302B. The process of node splitting is discussed in further detail below with respect to method 500 and FIG. 5.

Column 306 shows a particular insertion order of chunks. Column 308 shows results of applying a particular conventional node splitting method. Column 316 shows results of applying a particular content-defined node splitting method according to an embodiment of the present invention.

In diagram 300A, insertion sequence 302A includes a plurality of metadata chunks 304a-304h. Though depicted in diagram 300A as an insertion sequence 302A having eight chunks (e.g., chunks 304a-304h), an insertion sequence may have any number of chunks.

Insertion sequence 302A is a representation of the insertion order of data and/or metadata to be stored in nodes, such as in nodes 202 and/or entries 206 of FIG. 2. Similarly, chunks 304a-304h are representations of hashes stored in nodes 202/302A.

The first row of column 306 shows chunks 304a-304h of insertion sequence 302A prior to any split, to be inserted in correct order as shown to form nodes. Based on a content-defined criterion, discussed in further detail below with respect to FIG. 5, chunks 304c and 304g (shown as a filled block) are eligible content-defined split points. That is, insertion sequence 302A may be split after each of chunks 304c and 304g such that subsequent chunks may be moved into a new node.

The first row of column 308 shows insertion sequence 302A split into nodes 310, 312, and 314 using a conventional node-splitting criterion. In this example, the insertion sequence 302A is split after every third chunk. As such, node 310 contains chunks 304a-304c, node 312 contains chunks 304d-304f, and node 314 contains chunks 304g and 304h.

The first row of column 316 shows insertion sequence 302A split into nodes 318, 320, and 322 using the content-defined node splitting method 500 described below with respect to FIG. 5. In this example, insertion sequence 302A is split after each eligible content-defined split point. That is, insertion sequence 302A is split after each of chunks 304c and 304g such that chunks 304a-304c form node 318, chunks 304d-304g form node 320, and chunk 304h, as well as subsequent chunks up to and including the next eligible content-defined split point, form node 322.

In diagram 300B, insertion sequence 302B includes a plurality of metadata chunks 304a-304h which are to be inserted in the order shown to form nodes in a data structure. Additionally, a new chunk 324 is present, located in its proper (e.g., ideal, sorted) order, in insertion sequence 302B. For exemplary purposes, diagram 300B depicts chunk 324 located between chunks 304b and 304c, but one of skill in the art would recognize that, in the course of operations, an additional chunk may be located into any point in a node. Though depicted in diagram 300B as an insertion sequence 302B having nine chunks (e.g., chunks 304a-304h and 324), an insertion sequence may have any number of chunks and more than one chunk may be added and/or deleted.

Insertion sequence 302B is a representation of data, subnodes, and/or metadata to be stored in a node, such as in nodes 202 and/or entries 206 of FIG. 2. Insertion sequence 302B is equivalent to insertion sequence 302A, except that insertion sequence 302B contains a chunk 324 (shown as an X-ed box). Similarly, chunks 304a-304h and 324 are representations of hashes stored in nodes 202 of FIG. 2.

The second row of column 306 shows chunks 304a-304h of insertion sequence 302B prior to any split. Based on a content-defined criterion, discussed in further detail below with respect to FIG. 5, chunks 304c and 304g (shown as a filled block) are eligible content-defined split points. That is, insertion sequence 302B may be split after each of chunks 304c and 304g and, after such a split, subsequent chunks may be moved into a new node.

The second row of column 308 shows insertion sequence 302B split into nodes 326, 328, and 330 using a conventional node-splitting criterion. In this example, the insertion sequence 302B is split after every third chunk of chunks 304a-304h and newly inserted chunk 324. As such, node 326 contains chunks 304a, 304b, and 324, node 328 contains chunks 304c-304e, and node 330 contains chunks 304f-304h. Notice that none of the nodes 310, 312, 314 match nodes 326, 328, 330.

The second row of column 316 shows insertion sequence 302B split into nodes 332, 334, and 336 using the content-defined node splitting method 500 described below with respect to FIG. 5. In this example, insertion sequence 302B is split after each eligible content-defined split point. That is, insertion sequence 302B is split after each of chunks 304c and 304g such that chunks 304a-304c and chunk 324 form node 332, chunks 304d-304g form node 334 and chunk 304h, as well as subsequent chunks up to and including the next eligible content-defined split point, form node 336. Notice that comparing nodes 318, 320, 322 with nodes 332, 334, 336, only the node 332 containing the inserted chunk 324 has been altered.

FIG. 4 depicts respective diagrams 400A and 400B, which are an example of conventional node splitting in comparison to content-defined node splitting. Diagram 400A shows a comparison of conventional node splitting to content-defined node splitting in which an additional chunk 406 is located in its ideal, sorted order as shown in insertion sequence 402A. Diagram 400B shows a comparison of conventional node splitting to content-defined node splitting where the same additional chunk 406 is located out of sequence, as shown in insertion sequence 402B. The process of node splitting is discussed in further detail below with respect to method 500 and FIG. 5.

Column 408 shows a particular insertion order of chunks. Column 410 shows results of applying a particular conventional node splitting method. Column 418 shows results of applying a particular content-defined node splitting method according to an embodiment of the present invention.

In diagram 400A and 400B, insertion sequence 402A and 402B include a plurality of metadata chunks 404a-404h. Additionally, a new chunk 406 (shown as an X-ed box) is located in insertion sequence 402A in its proper position, but is located in 402B out of order, at a delayed position. For exemplary purposes, diagram 402A depicts chunk 406 located between chunks 404b and 404c, but one of skill in the art would recognize that, in the course of operations, such a chunk may be initially located at any point in an insertion sequence. Though depicted in diagram 400A as an insertion sequence 402A having nine chunks (e.g., chunks 404a-404h and 406), the insertion sequence may have any number of chunks and more than one chunk may be added and have its insertion delayed to a subsequent point in sequence 402B.

The first row of column 408 shows the insertion order of chunks 404a-404h and chunk 406 of insertion sequence 402A. This insertion order is equivalent to the final ordering of the chunks. Based on a content-defined criterion, discussed in further detail below with respect to FIG. 5, chunks 404c and 404g (shown as a filled block) are eligible content-defined split points. That is, insertion sequence 402A may be split after each of chunks 404c and 404g such that all subsequent chunks may be moved into a new node.

The first row of column 410 shows insertion sequence 402A split into nodes 412, 414, and 416 using a conventional node-splitting criterion. In this example, the insertion sequence 402A is split after every third chunk of chunks 404a-404h and newly inserted chunk 406. As such, node 412 contains chunks 404a, 404b, and 406, node 414 contains chunks 404c-404e, and node 416 contains chunks 404f-404h.

The first row of column 418 shows insertion sequence 402A split into nodes 420, 422, and 424 using the content-defined node splitting method 500 described below with respect to FIG. 5. In this example, insertion sequence 402A is split after each eligible content-defined split point. That is, insertion sequence 402A is split after each of chunks 404c and 404g such that chunks 404a-404c and chunk 406 form node 420, chunks 404d-404g form node 422 and chunk 404h, as well as subsequent chunks up to and including the next eligible content-defined split point, form node 424.

In diagram 400B, insertion sequence 402B includes a plurality of chunks 404a-404h in proper order. However, the additional chunk 406 is located in insertion sequence 402B out of order. For exemplary purposes, diagram 400B depicts chunk 406 after chunk 404h, but one of skill in the art would recognize that, in the course of operations, such a chunk may be located at any point in an insertion sequence. Though depicted in diagram 400B as an insertion sequence 402B having a sequence of nine insertions (e.g., chunks 404a-404h and 406), an insertion sequence may have any number of chunks and more than one chunk may be located out of order.

Insertion sequence 402B is a representation of data and/or metadata as stored in a node, such as in nodes 202 and/or entries 206 FIG. 2. Insertion sequence 402B is equivalent to insertion sequence 402A, except that it has had chunk 406 (shown as an X-ed box) located out of sequence (e.g., not in the ideal, sorted order as in insertion sequence 402A). Similarly, chunks 404a-404h and 406 of 402B are representations of hashes of content to be stored in nodes 202.

The second row of column 408 shows chunks 404a-404h and 406 of insertion sequence 402B. Based on a content-defined criterion, discussed in further detail below with respect to FIG. 5, chunks 404c and 404g (shown as a filled block) are eligible content-defined split points. That is, insertion sequence 402B may be split after each of chunks 404c and 404g such that subsequent chunks may be moved into a new node.

The second row of column 410 shows insertion sequence 402B split into nodes 428, 430, and 432 using a conventional node-splitting criterion. In this example, the insertion sequence 402B is split after every third chunk of original chunks 404a-404h and chunk 406. In conventional node splitting policies, when the node is split, chunks located out of sequence (e.g., chunk 406) are placed into the proper order (e.g., between chunks 404b and 404c, as in insertion sequence 402A of diagram 400A). As such, node 428 contains chunks 404a-404c and 406, node 430 contains chunks 404d-404f, and node 432 contains chunks 404g and 404h. Notice that none of the nodes 412, 414, 416 match the nodes 428,430,432.

The second row of column 418 shows insertion sequence 402B split into nodes 434, 436, and 438 using the content-defined node splitting method 500 described below with respect to FIG. 5. In this example, insertion sequence 402B is split after each eligible content-defined split point. That is, insertion sequence 402B is split after each of chunks 404c and 404g. In the content-defined node splitting method as described below with respect to FIG. 5, when the node is split, chunks previously located out of sequence (e.g., chunk 406) are placed into the proper order (e.g., between chunks 404b and 404c, as in insertion sequence 402A of diagram 400A). In this way, chunks 404a-404c and chunk 406 form node 434, chunks 404d-404g form node 436, and chunk 404h, as well as subsequent chunks up to and including the next eligible content-defined split point, form node 438. Notice that the constructed nodes 434, 436, 438 of the out-of-order insertion sequence 402B are identical to the constructed nodes 420, 422, 424 of the in-order insertion sequence 402A.

As seen in the description of FIGS. 3 and 4, when conventional node splitting methods are used, localized changes to underlying chunks (e.g., bytes, etc.) involving insertion or removal of data chunks typically changes many nodes. When there is a large difference in time of a data insertion, a proportionally large number of leaf nodes are also affected. As such, conventional node splitting methods yield large numbers of non-duplicate nodes.

In contrast, with content-defined node splitting, data structures are less sensitive to insertion order changes. Similarly, localized changes in the number of stored chunks are likely to have localized effects on the metadata storage structure, yielding large numbers of duplicate nodes. Node duplication is advantageous in that it reduces storage costs. In some applications, node duplication may also reduce data transmission costs and/or increase speed of operations.

FIG. 5 is a flowchart of a method 500 of content-defined node splitting according to an embodiment of the present invention. The method 500 may be performed by various components of storage system 100, such as by the above-mentioned processors or other similar components. The method starts at step 502, typically being invoked when a node has reached some predetermined (e.g. maximal) number of entries.

In step 504, a region of a node is searched for a content-defined split point. In at least one embodiment, a rolling window is employed to achieve a pseudorandom selection of split points. The search region may be predetermined (e.g., specified). That is, the search region may be user-defined and/or set using a global parameter. The search region may be searched forward and/or backward. In many cases, node entries themselves are sufficiently randomized such that a length one rolling window is appropriate (e.g., when the underlying data is being stored is hashes or content addresses of underlying content).

The content-defined split point is based on a hash function of the content of the node entries. That is, the hash functions of chunks in a node are used to determine the split point. The parameters of the hash function that define the split point may be predetermined and may be defined by a user or by the system and may differ according to the type of chunk (e.g. data, metadata, node, etc.). A search may be performed within the predetermined search region by searching for a particular sequence of bits in the hash of the chunks in the node. For example, a bitmask may be applied to the hashes of entries in the node and a search is performed to find when the selected bits satisfy a predetermined condition.

For example, the bits selected via the bitmask could be compared for equality to zero, or for exceeding some fixed value, or the selection could be selected using maximal or minimal encountered value. Other techniques well known to one of ordinary skill in the art of content-defined chunking can be used to perform the selection. Also, while preferable to store content addresses or a hash-related representation of underlying data in leaf nodes, this is only a suggested embodiment. In some embodiments, only leaf nodes are searched for content-defined split points. In alternative embodiments, all tree nodes of a file system (e.g., file system 106 of FIG. 1) are searched for content-defined split points.

In step 506, a determination is made as to whether a split point has been found. In at least one embodiment, the search in step 504 is performed until the first content-defined split point is found. If a content-defined split point is found, the method proceeds to step 508 and the content-defined split point is designated. If no content-defined split point is found, the method proceeds to step 510 and a split point is chosen.

In step 508, when an appropriate (e.g., predetermined) condition is met (e.g., satisfied), the associated chunk is designated as the content-defined split point. As discussed above with respect to FIGS. 3 and 4, the content-defined split point is associated with a particular chunk and the file system 106 may split the node containing that chunk in a known manner. For example, the file system 106 may split before or after the designated split point. The method then proceeds to step 512.

In step 510, a split point is chosen. In at least one embodiment, when no content-defined split point is found in step 504, the middle of the search region is designated as the split point. Other embodiments may prefer to use less restrictive variations of the original bitmask or other methods of selecting an alternative split point that is still content-defined.

In step 512, the node is split according to the designated split point. The method ends at step 514.

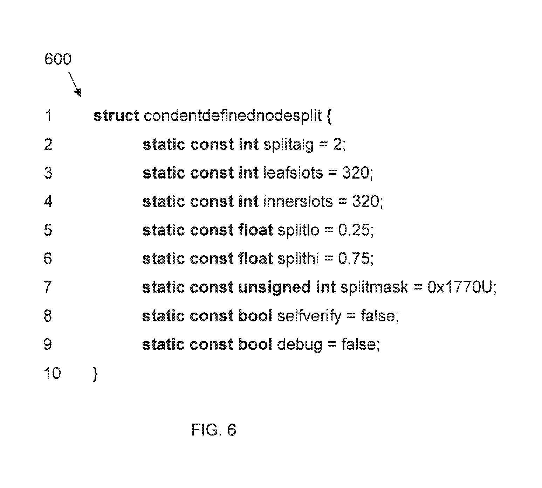

FIG. 6 defines a content-defined node splitting method according to an embodiment of the present invention. FIG. 6 shows a content-defined node splitting policy 600, which is an example of algorithm parameters that control method 500. That is, content-defined node splitting policy 600 directs the behavior of method 500, such as on a processor or the like as discussed above with respect to file system 100.

The policy 600 ("condentdefinednodesplit") in line 2 indicates that content-defined splitting is to be used. Lines 3 and 4 indicate that the maximum allowed fanout for leaf and inner nodes is 320. Whenever a node (e.g., during insertion sequences 302A, 302B, 402A, 402B, etc.) exceeds the maximum fanout, a search is performed to find a content-defined split point, as in step 504 of method 500. The nodes in the range between the splitio and splithi values (e.g., the predetermined search region) are searched. In this example, splitlo designates the lower bound of the range (e.g., 0.25x320 = 80) and splithi designates the upper bound of the search range (e.g., 0.75x320 = 240). Of course, any user-defined or otherwise predetermined search region may be used.

The search region is searched for content that has zeros in the splitmask bits of the hash, as shown in line 7 of policy 600. In operation, the number of set bits in the splitmask is substantially log₂(size of search region). The size of the search region is the number of entries in the search range. In this example, the size of the search region is 160. This maximizes the probability of having one content-defined split point within the search region. Of course, any appropriate bitmask (e.g., splitmask) may be used. Other variants of content-defined splitting may be selected via splitalg (line 2). For example, some variants may specify backup split point selection methods, which can be used to select a split point in the event that no split point is found during a first pass through the entries in the search region. For example, a less restrictive bitmask may be used, or a fall-back fixed split point (e.g. midpoint split) could be used in such cases. In some embodiments, the variants described above may be used in the search for a split point in step 504 and/or choosing a split point in step 510 of FIG. 5 above.

In some embodiments, metadata "data" is separated from the corresponding content addresses. The metadata "data" and content addresses are then stored in different blocks. Accordingly, if chunks are shifted in a file system (e.g., file system 200, etc.), although the metadata "data" in a subsequently grown data structure would be different, duplicate content address blocks could be eliminated.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

1. A method of content-defined node splitting comprising:
determining a split point of a node based at least in part on hashes of entries in the node;
splitting the node based on the determined split point.

2. The method of claim 1 further comprising:
searching at least a portion of the node for the split point.

3. The method of claim 1 or 2 wherein searching at least a portion of the node for the split point comprises searching a predetermined search region for a unique split point and determining a split point of a node based at least in part on hashes of entries in the node further comprises setting the unique split point as the determined split point.

4. The method of claim 2 or 3 wherein searching a predetermined search region for a unique split point comprises searching the predetermined region for a first encountered split point.

5. The method of one of claims 1 to 4 wherein determining a split point of a node based at least in part on hashes of entries in the node comprises:
searching at least a portion of the node for a predetermined bitmask of the hashes of the entries in the node which satisfies a predetermined condition.

6. The method of claim 5 further comprising:
setting the predetermined bitmask as a bitmask having substantially logarithm to the base two of a size of the searched portion of the node set bits.

7. The method of claim 5 or 6 wherein the predetermined condition comprises the predetermined bitmask of a hash of an entry indicating bits that are zero.

8. A machine readable medium having program instructions stored thereon, the instructions capable of execution by a processor and defining the steps of:
determining a split point of a node based at least in part on hashes of entries in the node;
splitting the node based on the determined split point.

9. The machine readable medium of claim 8 wherein the instructions further define the step of:
searching at least a portion of the node for a predetermined bitmask in the hashes of the entries in the node.

10. The machine readable medium of claim 8 or 9 wherein the instructions for searching at least a portion of the node for the split point comprises instructions for searching a predetermined search region for the first encountered split point and wherein the instructions for determining a split point of a node based at least in part on hashes of entries in the node further comprises instructions for setting the first encountered split point as the determined split point, and/or
wherein the instructions further define the step of:
searching at least a portion of the node for a predetermined bitmask of the hashes of the entries in the node that satisfies a predetermined selection criterion, and/or
wherein the instructions further define the step of:
setting the predetermined bitmask as a bitmask having logarithm of a size of the searched portion of the node to the base two bits, and/or
wherein the instructions further define the step of:
comparing the predetermined bitmask of the hashes of node entries with computed hashes of the node entries to determine bits that are zero.

11. An apparatus for content-defined node splitting comprising:
means for determining a split point of a node based at least in part on hashes of entries in the node;
means for splitting the node based on the determined split point.

12. The apparatus of claim 11 further comprising:
means for searching at least a portion of the node for the split point.

13. The apparatus of claim 11 or 12 wherein the means for searching at least a portion of the node for the split point comprises means for searching a predetermined search region for the first encountered split point and the means for determining a split point of a node based at least in part on hashes of entries in the node further comprises means for setting the first encountered split point as the determined split point.

14. The apparatus of one of claims 11 to 13 wherein the means for determining a split point of a node based at least in part on hashes of entries in the node comprises:
means for searching at least a portion of the node for a predetermined bitmask of the hashes of the chunks in the node that satisfies a predetermined selection criterion.

15. The apparatus of one of claims 11 to 14 further comprising:
means for setting the predetermined bitmask as a bitmask having logarithm of a size of the searched portion of the node to the base two bits, and/or
means for selecting the predetermined bitmask of the hashes of node entries to determine bits that are zero.
